# EUROPÄISCHE PATENTSCHRIFT

(11) **EP 1 728 655 B1**
(45) Veröffentlichungstag und Bekanntmachung des Hinweises auf die Patenterteilung: **31.12.2008**
(21) Anmeldenummer: 06010640.8
(22) Anmeldetag: 24.05.2006
(51) Int. Cl.: B60G 17/015, B60G 17/016, B60G 7/00, B60G 21/05, B62D 17/00

(54) **Radführung**
Wheel guiding device
Guidage de roue

(30) Priorität: 03.06.2005 DE 102005026047
(43) Veröffentlichungstag der Anmeldung: 06.12.2006
(60) Teilanmeldung: 08011040.6
(73) Patentinhaber: Benteler Automobiltechnik GmbH, 33104 Paderborn (DE)
(72) Erfinder: Zuber, Armin, 74909 Meckesheim (DE)
(74) Vertreter: Ksoll, Peter

(56) Entgegenhaltungen:
- EP-A- 1 216 859
- DE-A1- 3 703 618
- DE-A1- 3 734 287
- DE-A1- 3 827 039
- DE-A1- 10 000 390
- DE-A1- 19 915 214
- US-A- 5 351 985
- US-A- 5 577 771

## Beschreibung

Die Erfindung betrifft eine Radführung, insbesondere für Kraftfahrzeuge.

Bei Radführungen sind derzeit erhebliche technologische Fortschritte zu verzeichnen. Sie werden getrieben vom Kundenwunsch nach mehr Komfort, insbesondere geringerer Schwingungsbelastung und niedrigerem Geräuschpegel, erhöhter Fahrsicherheit und Lebensdauer.

Radführungen können als Einzelradaufhängung oder Verbund- und Starrachsen ausgeführt sein. Bauteile von Radführungen sind Radträger, Lenker und Lager. Lenker dienen zur Radführung und sind über Lager mit der Karosserie sowie mit dem Radträger verbunden. Bei den Lagern wird zwischen Trag- oder Führungsgelenken unterschieden. Vertikalkräfte werden im Wesentlichen über die Traggelenke übertragen. Die Traggelenke werden oftmals als wartungsfreie Kugelgelenke ausgeführt, in denen eine Kugel in einer dauergeschmierten Kunststoffschale gleitet. In Führungsgelenken können zur Geräuschisolation Kräfte über Gummi- oder Kunststoffelemente vorgesehen sein, welche zwischen Anschlussteile einvulkanisiert oder gepresst sind.

Zur Kursstabilisierung werden Elastizitäten genutzt, die in jeder Radführung vorhanden sind. Die Radstellung kann somit abhängig von der Situation durch die Lager beeinflusst werden. Dies wird beispielsweise bei spurkorrigierenden Lagern genutzt, bei denen Seitenkräfte einen Lenkeffekt bei Kurvenfahrten erzielen. Hierdurch wird das Eigenlenkverhalten nachhaltig verbessert.

Durch die Gummielemente in den Lagerungen wird ein erheblicher Teil der Schwingungen der Radführung gedämpft. Dennoch verbleibt ein Rest, der in die Karosserie übertragen und von den Passagieren als unangenehm wahrgenommen wird.

Aus der DE 199 15 214 A1 geht eine Einzelradaufhängung mit mehreren Lenkern hervor, wobei zwei der Lenker Anlenkungen aufweisen, die gegenüber dem Fahrzeugaufbau aktiv verstellbar sind. Dazu sind zwei zumindest annähernd horizontale Spindeln vorgesehen in deren Achsrichtung die Anlenkungen mit Hilfe von Elektromotoren verschoben werden können.

Die EP 1 216 859 A2 zeigt eine Verbundlenkerachse auf, die mit einem Linearaktuator aktiv gesteuert werden kann.

Der DE 37 34 287 C2 ist ein Fahrzeugfahrwerk entnehmbar, das einen Lenker aufweist. Dem Lenker ist eine elektromagnetische Anordnung mit einem Läufer und zwei Statoren zugeordnet. Der Läufer vermag sich geradlinig durch die Statoren zu bewegen. Zur Beeinflussung des Schwingungsverhaltens des Fahrzeugfahrwerks ist eine Regelung der elektromagnetischen Anordnung vorgesehen.

In der DE 100 00 390 A1 ist eine Lagerung an einem Fahrwerksteil beschrieben. Die Lagerung ist in zwei parallel Lagerelemente gegliedert, wobei die Schwenkachsen fluchtend ausgerichtet sind. Zwischen einem ersten und einem zweiten Lagerteil jedes Lagerelements ist ein Piezoelement vorgesehen mittels dessen die Lagerung aktiv beeinflusst werden kann.

Der Erfindung liegt die Aufgabe zugrunde, eine beeinflussbare und in ihrem Schwingungsverhalten verbesserte Radführung zu schaffen, die mithin einen Beitrag zur Erhöhung des Fahrkomforts der Passagiere leistet.

Die Aufgabe wird mit den im Patentanspruch 1 angegebenen Merkmalen gelöst.

Hiernach ist die Radführung als Verbundlenkerachse ausgeführt und umfasst zwei Längslenker und einen Querlenker, wobei die Verbundlenkerachse je ein Lager zur gelenkigen Verbindung eines Längslenkers mit einer Karosserie aufweist. Jedem Lager ist eine Anordnung zur Fahrwerksbeeinflussung und zur Schwingungsdämpfung mit einem Linearmotor zugeordnet ist. Die Wirkungsrichtungen der Linearmotoren unterscheiden sich voneinander und die Linearmotoren wirken mit einem Regler zusammen.

Die Fahrwerkseinstellungen werden durch die Anordnung während der Fahrt in Anpassung an die Straßen- und Verkehrsverhältnisse sowie die Eigenschaften des Fahrzeugs angepasst. Dies ist insbesondere durch Veränderungen der Fahrwerkseinstellungen wie beispielsweise der Spurwerte erreichbar.

Bei Auftreten einer Schwingung des Längslenkers oder Querlenkers im Fahrbetrieb wird diese sensorisch erfasst und durch eine dann aktiv erzeugte Kompensationsschwingung gedämpft und quasi aufgehoben bzw. in einen anderen insbesondere höheren Frequenzbereich verschoben.

Die Anordnung greift aktiv ein und erzeugt statische sowie periodische Verschiebungen beispielsweise einer Lagerachse. Statische Verschiebungen dienen der Spureinstellung, während periodische Verschiebungen in geeigneter Phasenlage den Effekt einer Schwingungsauslöschung bzw. Frequenzdämpfung erzielen. Zudem kann die Anordnung die Radführung von der Karosserie entkoppeln, so dass auch durch diese Maßnahme ein wirksamer Beitrag zur Schwingungsdämpfung realisiert wird. Eine Überleitung von Schwingungen, insbesondere von höherfrequenten Schwingungen, von der Radführung auf die Karosserie wird vermieden.

Die Wirkung der erfindungsgemäßen Anordnung beruht folglich auf einer Dämpfung von radseitigen Schwingungen, einer Verschiebung in andere Frequenzbereiche und/oder eine Entkopplung der Radführung von der Karosserie. Die Erfindung ermöglicht mithin eine aktive Vibrations- und Lärmunterdrückung. Hierdurch werden die Fahrsicherheit und der Fahrkomfort verbessert.

Die Linearmotoren werden zur Erzeugung von translatorischen Bewegungen eingesetzt. Sie zeichnen sich durch eine hohe Positioniergenauigkeit sowie durch ein hohes Beschleunigungsvermögen aus. Die Linearmotoren können auf einem elektromagnetischen, hydraulischen, pneumatischen oder piezoelektrischen Antriebsprinzip basieren.

Die Anordnung zur Fahrwerksbeeinflussung und zur Schwingungsdämpfung umfasst mehrere Linearmotoren, deren Wirkungsrichtungen sich voneinander unterscheiden. Somit können Schwingungen der Radführung nicht nur in einer Richtung, beispielsweise in einer Querrichtung zur Längsachse des Lagers, kompensiert werden, sondern auch in den davon unabhängigen Richtungen.

Für eine aktive Schwingungsdämpfung kommen verschiedene physikalische Systeme in Frage, welche elektrisch aktivierbare Bauelemente als Aktuatoren und/oder Sensoren umfassen. Im Rahmen der Erfindung ist auch eine vorteilhafte Nachrüstung von Radführungen möglich.

Vorteilhafte Ausgestaltungen des grundsätzlichen Erfindungsgedankens bilden den Gegenstand der abhängigen Patentansprüche 2 bis 7.

Zur Erfassung der Schwingungen der Radführung kann an der Karosserie wenigstens ein Beschleunigungssensor befestigt sein. Zweckmäßigerweise ist der Beschleunigungssensor mit einem Regler signalübertragend verbunden. Um Beschleunigungen in mehrere Raumrichtungen X, Y, Z zu erfassen, kann die Anordnung zur Fahrwerksbeeinflussung und zur Schwingungsdämpfung auch mehrere Beschleunigungssensoren aufweisen. Durch die unmittelbare Anordnung von Beschleunigungssensoren an der Karosserie werden die Vibrationen an dem Ort erfasst, an dem sie ausgelöscht werden sollen. Auf diese Weise wird die Konstruktion der Anordnung zur Fahrwerksbeeinflussung und zur Schwingungsdämpfung wesentlich vereinfacht.

Der Anordnung zur Fahrwerksbeeinflussung und zur Schwingungsdämpfung können zudem Federkörper zugeordnet werden, die mit den Linearmotoren zusammenwirken. Die Federkörper können sowohl parallel als auch in Reihe zu den Linearmotoren geschaltet sein. Als Federkörper eignen sich neben den herkömmlichen Gummifedern insbesondere Schraubenfedern oder Blattfedern sowie pneumatische oder hydraulische Dämpfer. Die Federkörper können einseitig oder beidseitig einer Lagerachse in einer Richtung parallel zur Längsachse der Linearmotoren angeordnet sein.

Die Linearmotoren können auf einem elektromagnetischen Antriebsprinzip basieren. Derartige Linearmotoren bestehen aus einem Primärteil, das stromdurchflossen ist, sowie einem Sekundärteil, dem sogenannten Reaktionsteil, das Permanentmagnete aufweist. Vorteilhaft können die Reaktionsteile der Linearmotoren mit der Lagerachse gekoppelt sein.

Die Linearmotoren können alternativ auch piezokeramische Aktuatoren aufweisen. Bei piezokeramischen Aktuatoren erfolgt eine Umsetzung von elektrischer Energie in mechanische Energie ohne bewegte Teile, wodurch eine sehr schnelle Reaktion sowie eine lange Lebensdauer der Teile gewährleistet ist. Das Prinzip der Piezoelemente beruht darauf, dass die darin eingebetteten Kristalle ihre Form unter dem Einfluss eines elektrischen Felds ändern. Dies ermöglicht eine aktive Anregung der Piezoelemente durch einen externen Regler. Über die Piezoelemente erfolgt dann die Anregung des Lagers, wodurch die Gegen- bzw. Kompensationsschwingung direkt an der Radführung erzeugt wird. Vorzugsweise bilden die piezokeramischen Aktuatoren einen Stapelaktuator.

Des Weiteren ist vorgesehen, dass das Steuerverhalten der Anordnung zur Fahrwerksbeeinflussung und zur Schwingungsdämpfung einstellbar sein kann. Auf diese Weise wird es dem Fahrer nach Belieben ermöglicht, über Schalter oder Drehregler auf das Geräusch bzw. die Schwingungen der Radführung unmittelbar Einfluss zu nehmen, z.B. um ein besonders sportliches Fahrgefühl zu erzeugen.

Die Erfindung wird nachfolgend anhand von in den Zeichnungen technisch vereinfachten Ausführungsbeispielen näher beschrieben. Es zeigen:
- Figur 1: eine Draufsicht auf eine Radführung;
- Figur 2: eine Draufsicht auf eine alternative Ausführungsform der Radführung;
- Figur 3: eine integrierte Anordnung der Anordnung zur Fahrwerksbeeinflussung und Schwingungsdämpfung und
- Figur 4: eine externe Anordnung der Anordnung zur Fahrwerksbeeinflussung und Schwingungsdämpfung.

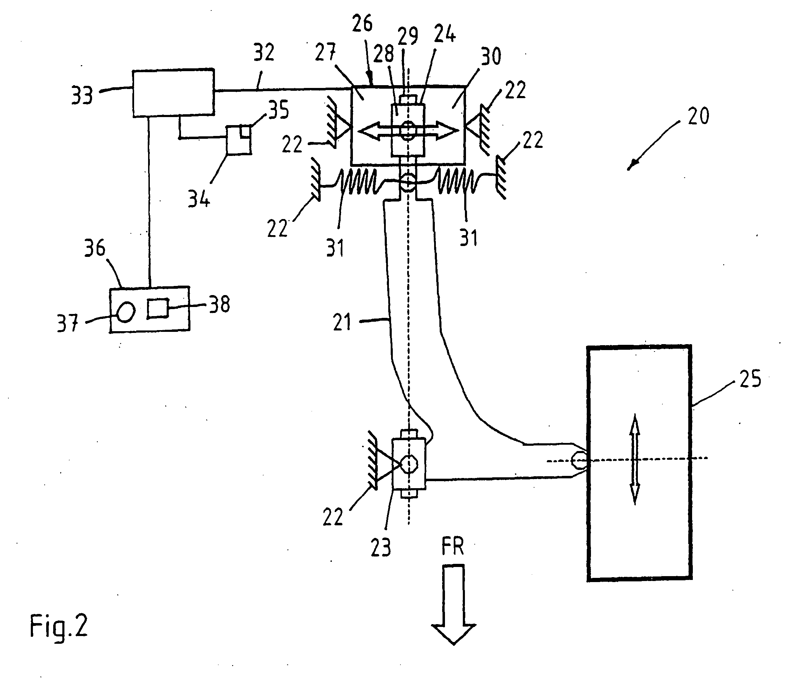

Hierbei dient die in der Figur 2 gezeigte Ausführungsform lediglich der Erläuterung des Hindergrundes der Erfindung und ist nicht Gegenstand eines Anspruchs.

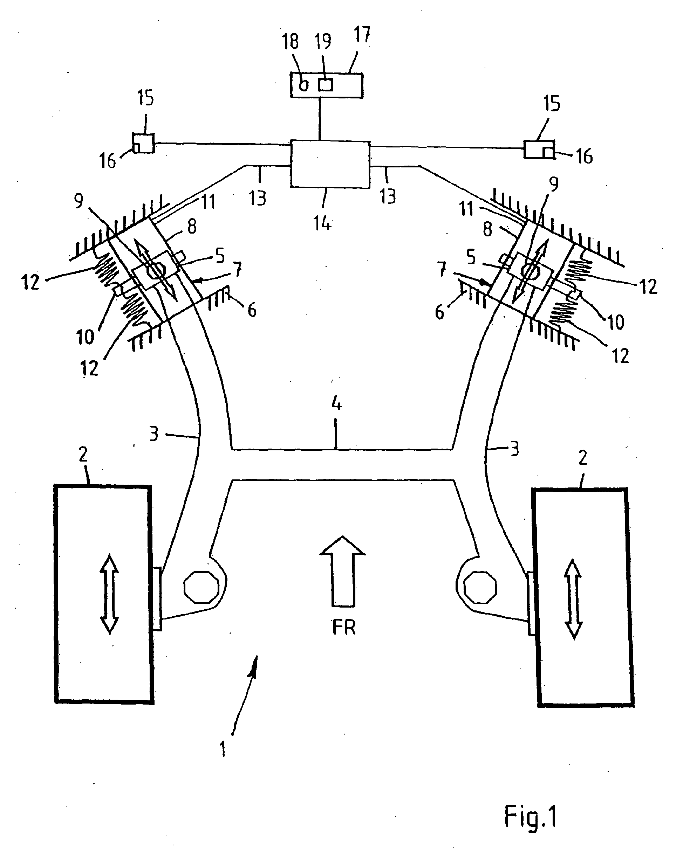

In Figur 1 ist eine Radführung 1, als Verbundlenkerachse ausgeführt, dargestellt. Die Radführung 1 dient der Führung von Rädern 2, die durch die Fahrbahn zu Schwingungen angeregt werden. Die Fahrtrichtung wird durch den Pfeil FR angezeigt. Die Radführung 1 umfasst zwei Längslenker 3 und einen Querträger 4. Die Längslenker 3 sind über zwei Lager 5 an der Karosserie 6 befestigt. Jedem Lager 5 ist eine aktive Anordnung 7 zur Fahrwerksbeeinflussung und zur Schwingungsdämpfung zugeordnet. Die Anordnungen 7 zur Fahrwerksbeeinflussung und Schwingungsdämpfung umfassen elektromagnetische Linearmotoren 8, deren Reaktionsteile 9 mit den Anlenkzapfen 10 der Lager 5 und deren Primärteile 11 mit der Karosserie 6 gekoppelt sind. Es sind ferner an jedem Lager 5 zwei Schraubenzugfedern 12 vorgesehen, die parallel zur Anordnung 7 zur Fahrwerksbeeinflussung und zur Schwingungsdämpfung geschaltet sind. Grundsätzlich ist es möglich, die Schraubenzugfedern 12 durch Gummifedern oder Blattfedern zu ersetzen. Die Schraubenzugfedern 12 jedes Lagers 5 haben die gleiche Längsachse und sind beidseitig des jeweiligen Anlenkzapfens 10 angeordnet. Die Schraubenzugfedern 12 koppeln den Anlenkzapfen 10 mit der Karosserie 6. Die Anordnung 7 zur Fahrwerksbeeinflussung und zur Schwingungsdämpfung in Verbindung mit den Schraubenzugfedern 12 bildet eine Feder/Dämpfer-Einheit.

Die Linearmotoren 8 sind über Drahtverbindungen 13 an einen Regler 14 angeschlossen. Der Regler 14 ist mit zwei Sensoreinheiten 15 signalübertragend verbunden, die an der Karosserie 6 in der Nähe des Lagers 5 befestigt sind. Jede Sensoreinheit 15 weist einen Beschleunigungssensor 16 zur Aufnahme von Beschleunigungen in die Längsrichtungen der Längslenker 3 auf. Der Regler 14 ist zusätzlich mit einer Steuereinheit 17 gekoppelt, durch die der Fahrer das Steuerverhalten der Anordnung 7 zur Fahrwerksbeeinflussung und zur Schwingungsdämpfung über Drehregler 18 und Schalter 19 einstellen kann.

In Figur 2 ist eine weitere Radführung 20, diesmal als McPherson-Achse ausgeführt, dargestellt. Ein Querlenker 21 ist an eine Karosserie 22 über ein Traggelenk 23 und ein Führungsgelenk 24 angebunden und dient der Führung eines Rades 25. Die Fahrtrichtung ist durch den Pfeil FR aufgezeigt. Das Rad 25 wird durch die Fahrbahn zu Schwingungen angeregt. Über das Traggelenk 23 ist der Querlenker 21 mit der Karosserie 22 gekoppelt, wobei die Längsachse des Traggelenks 23 in Fahrtrichtung FR zeigt. Dem Führungsgelenk 24 ist eine aktive Anordnung 26 zur Fahrwerksbeeinflussung und zur Schwingungsdämpfung zugeordnet. Ein elektromagnetischer Linearmotor 27 der Anordnung 26 zur Fahrwerksbeeinflussung und Schwingungsdämpfung ist mit seinem Reaktionsteil 28 an das Führungsgelenk 24 gekoppelt, das auf einen Querlenkerpin 29 des Querlenkers 21 gesteckt ist. Der Primärteil 30 des Linearmotors 27 ist an der Karosserie 22 befestigt. Die Längsrichtung des Linearmotors 27 erstreckt sich quer zur Fahrtrichtung FR. Parallel zum Linearmotor 27 sind zwei in Reihe geschaltete Schraubenzugfedern 31 vorgesehen, die beidseitig am Querlenkerpin 29 angreifen und diesen mit der Karosserie 22 des Fahrzeugs verbinden. Grundsätzlich ist es auch hier möglich, die Schraubenzugfedern 31 durch Gummifedern oder Blattfedern zu ersetzen.

Der Linearmotor 27 ist über Drahtverbindungen 32 an einen Regler 33 angeschlossen. Der Regler 33 ist mit einer Sensoreinheit 34 signalübertragend verbunden, die an der Karosserie 22 in der Nähe des Führungsgelenks 24 befestigt ist. Die Sensoreinheit 34 weist einen Beschleunigungssensor 35 zur Aufnahme von Beschleunigungen in die Längsrichtung des Linearmotors 27 auf. Der Regler 33 ist zusätzlich mit einer Steuereinheit 36 gekoppelt, durch die der Fahrer das Steuerverhalten der Anordnung 26 zur Fahrwerksbeeinflussung und zur Schwingungsdämpfung über Drehregler 37 und Schalter 38 einstellen kann.

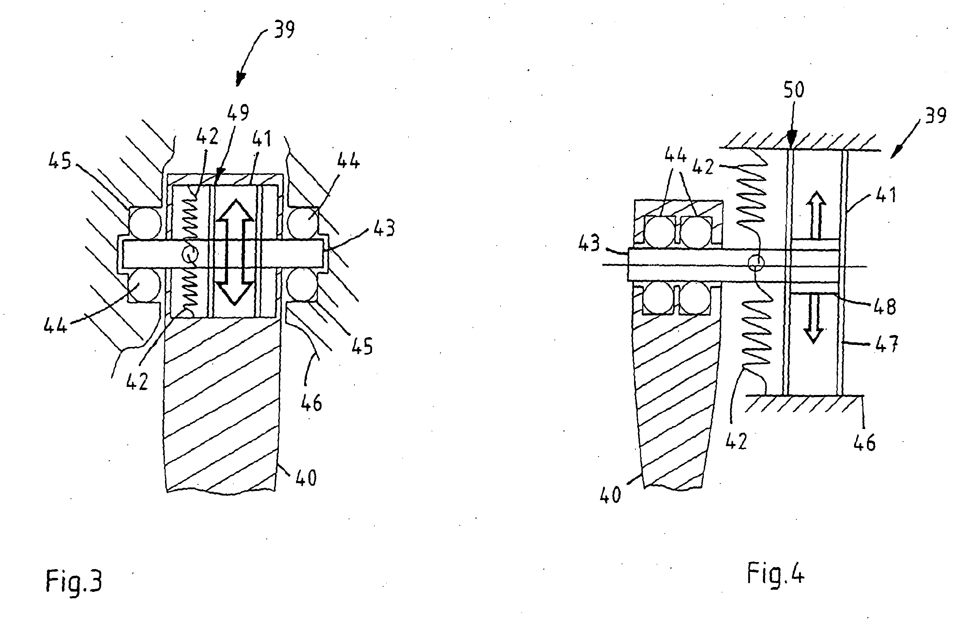

In den Figuren 3 und 4 sind zwei mögliche Ausführungsformen der aktiven Anordnung (49; 50) zur Fahrwerksbeeinflussung und Schwingungsdämpfung an einem Lager 39 am Beispiel eines Querlenkers 40 dargestellt. Es ist zu unterscheiden zwischen einer integrierten und einer externen Ausführungsform der aktiven Anordnung (49; 50) zur Fahrwerksbeeinflussung und zur Schwingungsdämpfung.

Bei einer integrierten Ausführung (Fig. 3) ist die aktive Anordnung 49 zur Fahrwerksbeeinflussung und zur Schwingungsdämpfung im Innern des Querlenkers 40 angeordnet. Der Linearmotor 41 und zwei parallel geschaltete Schraubenzugfedern 42, statt derer auch Gummi- oder Blattfedern zum Einsatz gelangen können, sind an eine Lagerachse 43 gekoppelt, die sich quer durch den Querlenker 40 erstreckt. Die Lageachse 43 ist durch zwei Kugellager 44 an der Karosserie 46 gelagert, wobei die Kugellager 44 beidseitig des Querlenkers 40 in Aussparungen 45 der Karosserie 46 befestigt sind. Grundsätzlich können die Kugellager 44 durch Gleitlager ersetzt werden.

Bei einer externen Ausführung (Fig. 4) ist die aktive Anordnung 50 zur Fahrwerksbeeinflussung und Schwingungsdämpfung seitlich des Querlenkers 40 angeordnet. Die Anordnung 50 zur Fahrwerksbeeinflussung und zur Schwingungsdämpfung umfasst einen Linearmotor 41 dessen Primärteil 47 an der Karosserie 46 befestigt ist und dessen Reaktionsteil 48 starr mit der Lagerachse 43 gekoppelt ist. Zwei Schraubenzugfedern 42 - welche auch durch Gummi- oder Blattfedern ersetzbar sind - sind parallel zum Linearmotor 41 vorgesehen und zueinander in Reihe geschaltet. Sie greifen beidseitig an der Lagerachse 43 an und koppeln diese mit der Karosserie 46. Die Lagerachse 43 erstreckt sich quer durch den Querlenker 40. Im Innern des Querlenkers 40 sind zwei Kugellager 44 angeordnet, die auf die Lagerachse 43 gesteckt sind. Grundsätzlich ist es auch hier möglich die Kugellager 44 durch Gleitlager zu ersetzen.

Die Anordnung 7, 26, 49, 50 zur Fahrwerksbeeinflussung und zur Schwingungsdämpfung beeinflusst über Linearmotoren 8, 27, 41 die Fahrwerkseinstellung und das Schwingungsverhalten der Radführung 1, 20 aktiv. Durch gezielte Positionierungen des Reaktionsteils 9, 28, 48 können die Spurwerte des Fahrwerks verändert werden. Im Falle einer Verbundlenkerachse 1 ist der Effekt verstärkbar durch ungleichsinnige Verschiebungen der Anlenkzapfen an beiden Lagern 5 durch die Linearmotoren 8.

Im Betrieb auftretende Eigenschwingungen der Radführung 1, 20 werden durch den Beschleunigungssensoren 16, 35 in Sensoreinheiten 15, 34 erfasst, durch den Regler 14, 33 ausgewertet und über Linearmotoren 8, 27, 41 mit einer Kompensationsschwingung interferiert. Hierdurch wird eine periodische Vibration der Radführung 1, 20 generiert, die in geeigneter Phasenlage eine Schwingungsauslöschung bzw. -dämpfung oder -verschiebung bzw. Entkopplung erzielt. Die aus dem Betrieb resultierenden störenden Schwingungen werden auf diese Weise direkt am Ort der Entstehung bekämpft. Hierdurch erfolgt eine Schwingungs- und Körperschalldämpfung. Vibrationen der Radführung 1, 20 werden nicht mehr auf die Karosserie 6, 22, 46 übertragen, wodurch sich der Fahrkomfort für die Passagiere deutlich erhöht.

### Bezugszeichen:

- 1 -: Radführung
- 2-: Rad
- 3-: Längslenker
- 4 -: Querträger
- 5-: Lager
- 6-: Karosserie
- 7-: Anordnung
- 8-: Linearmotor
- 9-: Reaktionsteil
- 10-: Anlenkzapfen
- 11 -: Primärteil
- 12-: Schraubenzugfeder
- 13 -: Drahtverbindung
- 14-: Regler
- 15-: Sensoreinheit
- 16 -: Beschleunigungssensor
- 17-: Steuereinheit
- 18-: Drehregler
- 19-: Schalter
- 20-: Radführung
- 21 -: Querlenker
- 22-: Karosserie
- 23-: Traggelenk
- 24-: Führungsgelenk
- 25-: Rad
- 26-: Anordnung
- 27-: Linearmotor
- 28-: Reaktionsteil
- 29-: Querlenkerpin
- 30-: Primärteil
- 31 -: Schraubenzugfeder
- 32 -: Drahtverbindung
- 33-: Regler
- 34-: Sensoreinheit
- 35 -: Beschleunigungssensor
- 36-: Steuereinheit
- 37-: Drehregler
- 38 -: Schalter
- 39-: Lager
- 40-: Querlenker
- 41-: Linearmotor
- 42-: Schraubenzugfeder
- 43-: Lagerachse
- 44-: Kugellager
- 45-: Aussparung
- 46-: Karosserie
- 47 -: Primärteil
- 48-: Reaktionsteil
- 49 -: Anordnung
- 50-: Anordnung

- FR -: Fahrtrichtung

## Patentansprüche

1. Radführung, insbesondere für Kraftfahrzeuge, die als Verbundlenkerachse ausgeführt ist und zwei Längstenker (3) und einen Querlenker (4) umfasst, wobei die Verbundlenkerachse je ein Lager (5, 39) zur gelenkigen Verbindung eines Längslenkers (3) mit einer Karosserie (6, 46) aufweist, **dadurch gekennzeichnet, dass** jedem Lager (5, 39) eine Anordnung (7, 49, 50) zur Fahrwerksbeeinflussung und zur Schwingungsdämpfung mit einem Linearmotor (8, 41) zugeordnet ist, wobei sich die Wirkungsrichtungen der Linearmotoren (8, 41) voneinander unterscheiden und die Linearmotoren (8, 41) mit einem Regler (14) zusammenwirken.

2. Radführung nach Anspruch 1, **dadurch gekennzeichnet, dass** die Anordnung (7, 49, 50) zur Fahrwerksbeeinflussung und zur Schwingungsdämpfung zumindest einen Beschleunigungssensor (16) umfasst, der an der Karosserie (6, 46) befestigt ist.

3. Radführung nach Anspruch 1 oder 2, **dadurch gekennzeichnet, dass** die Anordnung (7, 49, 50) zur Fahrwerksbeeinflussung und zur Schwingungsdämpfung Federkörper (12, 42) aufweist, die mit den Linearmotoren (8, 41) zusammenwirken.

4. Radführung nach einem der Ansprüche 1 bis 3, **dadurch gekennzeichnet, dass** die Linearmotoren (8, 41) auf einem elektro-magnetischen Antriebsprinzip basieren.

5. Radführung nach einem der Ansprüche 1 bis 4, **dadurch gekennzeichnet, dass** die Linearmotoren (8, 41) piezokeramische Aktuatoren aufweisen.

6. Radführung nach Anspruch 5, **dadurch gekennzeichnet, dass** die piezokeramischen Aktuatoren einen Stapelaktuator bilden.

7. Radführung nach einem der Ansprüche 1 bis 6, **dadurch gekennzeichnet, dass** das Steuerverhalten der Anordnung (7, 49, 50) zur Fahrwerksbeeinflussung und zur Schwingungsdämpfung einstellbar ist.

## Claims

1. Wheel guiding device, in particular for motor vehicles, which wheel guiding device is designed as a twist beam rear axle and comprises two longitudinal links (3) and a transverse link (4), with the twist beam rear axle having in each case one mount (5, 39) for articulatedly connecting a longitudinal link (3) to a body (6, 46), **characterized in that** each mount (5, 39) is assigned a chassis manipulation and vibration damping arrangement (7, 49, 50) having a linear motor (8, 41), with the lines of action of the linear motors (8, 41) being different from one another, and with the linear motors (8, 41) interacting with a controller (14).

2. Wheel guiding device according to Claim 1, **characterized in that** the chassis manipulation and vibration damping arrangement (7, 49, 50) comprises at least one acceleration sensor (16) which is fastened to the body (6, 46).

3. Wheel guiding device according to Claim 1 or 2, **characterized in that** the chassis manipulation and vibration damping arrangement (7, 49, 50) has spring bodies (12, 42) which interact with the linear motors (8, 41).

4. Wheel guiding device according to one of Claims 1 to 3, **characterized in that** the linear motors (8, 41) are based on an electromagnetic operating principle.

5. Wheel guiding device according to one of Claims 1 to 4, **characterized in that** the linear motors (8, 41) have piezoceramic actuators.

6. Wheel guiding device according to Claim 5, **characterized in that** the piezoceramic actuators form an actuator stack.

7. Wheel guiding device according to one of Claims 1 to 6, **characterized in that** the control behaviour of the chassis manipulation and vibration damping arrangement (7, 49, 50) is adjustable.

## Revendications

1. Guidage de roue, en particulier pour véhicule automobile, qui est réalisé sous forme d'essieu à bras longitudinaux combinés et qui comprend deux bras longitudinaux (3) et un bras transversal (4), l'essieu à bras longitudinaux combinés comprenant un palier respectif (5, 39) pour la liaison articulée d'un bras longitudinal (3) avec une carrosserie (6, 46),
**caractérisé en ce qu'**un agencement (7, 49, 50) destiné à influencer le train de roulement et à amortir les oscillations avec un moteur linéaire (8, 41) est associé à chaque palier (5, 39), les directions d'action des moteurs linéaires (8, 41) étant mutuellement différentes et les moteurs linéaires (8, 41) coopérant avec un régulateur (14).

2. Guidage de roue selon la revendication 1, **caractérisé en ce que** l'agencement (7, 49, 50) destiné à influencer le train de roulement et à amortir les oscillations comprend au moins un capteur d'accélération (16) qui est fixé à la carrosserie (6, 46).

3. Guidage de roue selon la revendication 1 ou 2, **caractérisé en ce que** l'agencement (7, 49, 50) destiné à influencer le train de roulement et à amortir les oscillations comprend des corps à ressort (12, 42) qui coopèrent avec les moteurs linéaires (8, 41).

4. Guidage de roue selon l'une des revendications 1 à 3, **caractérisé en ce que** les moteurs linéaires (8, 41) sont basés sur un principe d'entraînement électromagnétique.

5. Guidage de roue selon l'une des revendications 1 à 4, **caractérisé en ce que** les moteurs linéaires (8, 41) comprennent des actionneurs piézo-céramiques.

6. Guidage de roue selon la revendication 5, **caractérisé en ce que** les actionneurs piézo-céramiques forment un actionneur en pile.

7. Guidage de roue selon l'une des revendications 1 à 6, **caractérisé en ce que** le comportement de commande de l'agencement (7, 49, 50) destiné à influencer le train de roulement et amortir les oscillations est réglable.
